# EUROPÄISCHE PATENTSCHRIFT

(11) **EP 1 335 063 B1**
(45) Veröffentlichungstag und Bekanntmachung des Hinweises auf die Patenterteilung: **14.04.2004**
(21) Anmeldenummer: 02002241.4
(22) Anmeldetag: 30.01.2002
(51) Int. Cl.: D06N 7/00, B32B 27/12, A41D 31/02

(54) **Wasserdampfdurchlässiges, wasserresistentes Verbundmaterial**
Water vapor permeable, water-resistant composite material
Matériau composite perméable à la vapeur d'eau et résistant à l'eau

(43) Veröffentlichungstag der Anmeldung: 13.08.2003
(73) Patentinhaber: Sympatex Technologies GmbH, 42103 Wuppertal (DE)
(72) Erfinder: Schuster, Volker, 89551 Königsbraun (DE); Hürten, Joachim, 42349 Wuppertal (DE)
(74) Vertreter: Muth, Arno, Dipl.-Ing.

(56) Entgegenhaltungen:
- WO-A-00/13889
- WO-A-98/06891
- US-A- 4 194 041

## Beschreibung

Gegenstand der vorliegenden Erfindung ist ein wasserdampfdurchlässiges, wasserresistentes Verbundmaterial für Bekleidung, umfassend:
a) eine wasserresistente, wasserdampfdurchlässige Funktionsschicht mit einer ersten und einer zweiten Seite,
b) einen an der ersten Seite der Funktionsschicht befestigten Stoff,
c) eine Mehrzahl diskreter, Polymer-Punkte, die ein diskontinuierliches, futtererzeugendes Muster auf der Oberfläche der zweiten Seite der Funktionsschicht bilden.

Ein derartiges Verbundmaterial ist aus EP 0 918 902 bekannt Die Polymer-Punkte dienen hierbei als Futterersatz und müssen deshalb abriebbeständig ausgebildet sein. Hierzu müssen für die Polymer-Punkte harte Materialien ausgewählt werden.

Solche Verbundmaterialien dienen dazu, leichte Oberbekleidungen herzustellen, die dem Wind- und Regenschutz dienen. Insbesondere bei sportlicher Betätigung ist es wichtig, dass der Träger dieser Kleidung nicht nur gegen Regen geschützt wird sondern vor allen Dingen gegen Wind, der insbesondere beim Schwitzen Erkältungen auslösen kann. Wird eine aus derartigem Verbundmaterial hergestellte Oberbekleidung im Sommer verwendet, kommen diese Bekleidungsstücke häufig zumindest im Bereich der Arme und Beine mit der Haut des Trägers in Berührung. Hierbei hat es sich herausgestellt, dass die auf der Innenseite des Verbundwerkstoffes angeordneten Polymer-Punkte vom Träger des Bekleidungsstückes auf der Haut als unangenehm empfunden werden. Wird diese Bekleidung als Winterbekleidung getragen, kommen die Polymer-Punkte zwar nicht in Kontakt mit der Haut. Es hat sich aber gezeigt, dass aufgrund dessen, dass der Träger unter der Oberbekleidung wärmende Kleidung wie Pullover oder dergleichen trägt, dass beim Ausziehen der Oberbekleidung die Polymer-Punkte des Verbundstoffes häufig ein leichtes Abstreifen der Oberbekleidung von Armen und/oder Beinen verhindern. Diese Behinderung ist häufig so groß, dass die Armteile und/oder die Beinteile beim Ausziehen der Oberbekleidung umgestülpt werden und anschließend wieder in die Normallage zurück gestülpt werden müssen.

Aufgabe der vorliegenden Erfindung ist es, die oben beschrieben Nachteile zumindest zu verringern.

Diese Aufgabe wird erfindungsgemäß gelöst durch ein wasserdampfdurchlässiges, wasserresistentes Verbundmaterial für Bekleidung, umfassend:
a) eine wasserresistente, wasserdampfdurchlässige Funktionsschicht mit einer ersten und einer zweiten Seite,
b) einen an der ersten Seite der Funktionsschicht befestigten Stoff,
c) eine Mehrzahl diskreter, Polymer-Punkte, die ein diskontinuierliches, futtererzeugendes Muster auf der Oberfläche der zweiten Seite der Funktionsschicht bilden,
d) eine wasserdampfdurchlässige, als Beschichtung ausgebildete Deckschicht, welche mit den Polymerpunkten und zwischen den Polymer-Punkten auch mit der Funktionsschicht verbunden ist.

Im Gegensatz zu den bekannten, beispielsweise in US-A 4194 041 beschriebenen Laminaten, bei welchen mehrere Membranen diskontinuierlich, beispielsweise über Klebpunkte, verbunden sind, weist das erfindungsgemäße Verbundmaterial eine als Beschichtung ausgebildete Deckschicht auf. Ein aus diesem Verbundmaterial hergestelltes Kleidungsstück benötigt auf der Innenseite des Kleidungsstückes kein Futter mehr, während Kleidungsstücke aus den oben beschriebenen, bekannten Laminaten regelmäßig noch ein Futter aufweisen, um die dünnen Membranen vor Beschädigung zu schützen. Des Weiteren kann das erfindungsgemäße Verbundmaterial kostengünstiger hergestellt werden als die bekannten Laminate.

Eine aus einem solchen Verbundstoff hergestellte Oberbekleidung wird vom Träger im Sommer als angenehm auf der Haut liegend gesehen. Beim Ausziehen der Oberbekleidung ist normalerweise kein Hängenbleiben der Arm- und/oder Beinkleider mehr feststellbar.

Im einfachsten Fall kann die Deckschicht ein Dekor aufweisen, welches dem Dekor einer Futterschicht nachgestellt ist. Bevorzugt wird jedoch die Deckschicht transparent ausgebildet, wodurch es möglich wird, durch spezielle Anordnung der diskreten Polymer-Punkte den Eindruck einer Futterschicht zu erzeugen. Dies gelingt besonders gut, wenn die Summe der durch die Polymer-Punkte auf der Funktionsschicht abgedeckte Flächen etwa 20 bis 60 %, bevorzugt 30 bis 50 % der gesamten Funktionsschichtfläche beträgt. Der Eindruck einer Futterschicht kann dadurch noch verstärkt werden, wenn die Funktionsschicht selbst Farbpigmente enthält und somit als gefärbter Hintergrund für die gegebenenfalls ebenfalls mit Farbpigmenten angereicherten Polymer-Punkte wirkt. Als besonders dekorativ haben sich Polymer-Punkte in gegebenenfalls verschiedenen Farben auf einer schwarz gefärbten Funktionsschicht erwiesen.

Es hat sich als besonders zweckmäßig herausgestellt, die Deckschicht aus einem hydrophilen Material auszubilden. Sofern der Träger eines aus einem derartigen Verbundwerkstoffes hergestellten Kleidungsstückes schwitzt und Schweißtropfen aussondert, werden diese von der hydrophilen Deckschicht aufgesaugt und nach außen großflächig an die Funktionsschicht weitergeleitet, wodurch die durch das Schwitzen erzeugte Feuchtigkeit in sehr kurzer Zeit nach außen abgeführt wird, so dass für den Träger einer solchen Kleidung ein behagliches Klima gewährleistet werden kann. Hierbei hat es sich als besonders vorteilhaft herausgestellt, wenn die Deckschicht aus Polyurethan besteht, wobei eine Dicke der Deckschicht zwischen 1 und 25µm, bevorzugt zwischen 1 und 10 µm, sich als besonders vorteilhaft herausgestellt hat. Eine solche Deckschicht aus transparentem Material reduziert deutlich den bei Funktionsschichten wie auch bei den Polymer-Punkten vorhandenen Glanz, so dass dann die als Futterersatz dienende Deckschicht ein angenehmes Aussehen aufweist.

Insbesondere hat es sich als Vorteil herausgestellt, wenn die Polymer-Punkte aus geschäumtem Material bestehen. Ein Verbundwerkstoff, welcher derartige Polymer-Punkte enthält, wird als besonders tragefreundlich empfunden. Darüber hinaus wird durch diese Polymer-Punkte aus Schaummaterial die Wärmeisolation des Verbundmaterials deutlich erhöht. Hierbei hat es sich für das erfindungsgemäße Laminat als besonders günstig herausgestellt, wenn die Dicke der Polymer-Punkte zwischen 100 und 250 µm, bevorzugt zwischen 150 und 170 µm beträgt.

Die Erfindung wird anhand des nachfolgenden Beispiels näher erläutert.

Auf ein Laminat welches ein Geweicht von etwa 130 g/m² aufweist und aus einer wasserdichten, wasserdampfdurchlässigen Funktionsschicht, welche unter dem Warenzeichen SYMPATEX vertrieben wird und einem textilen Gewebe aus Polyestergarnen besteht, werden auf die freie zweite Seite der Funktionsschicht Polymer-Punkte erzeugt. Als Material für die Polymer-Punkte wird das System TUBISCREEN der Firma Chemische Fabrik in Tübingen nach der diesem System beiliegenden Gebrauchsanleitung mittels Rotationsdruck aufgebracht. Für das Aufbringen des Systems wird beim Rotationsdruck eine Schablone verwendet, durch welche auf die Funktionsschicht Polymer-Punkte in Form von Dreiecken erzeugt werden. Nach Trocknung und Wärmebehandlung der Polymer-Punkte sind Polymerschaum-Punkte entstanden, die in Aufsicht die Form von Dreiecken aufweisen, eine Dicke von etwa 160 µm aufweisen und etwa 50 % der Funktionsschicht, die schwarz gefärbt ist, überdecken.

Sowohl die sichtbaren Flächen der Funktionsschicht wie auch die Polymerschaum-Punkte weisen einen starken Glanz auf. Ein aus diesem Verbundmaterial hergestelltes Bekleidungsstück löst ein unangenehmes Tragegefühl auf der Haut des Trägers aus und läßt sich nur mit großer Mühe von Armen und Beinen, häufig nur durch Umstülpen abstreifen. Der nach ISO 11092 gemessene RET-Wert beträgt 17 und liegt somit in einer Klasse gemäß der Norm ENV343 vom Februar 1998, die das Laminat als für Wetterschutzkleidung gut geeignet ausweist.

Das oben beschrieben Laminat wird nunmehr gemäß der vorliegenden Erfindung mit einer Beschichtung auf der Polymer-Punkt-Seite versehen. Hierzu wird ein handelsübliches Einkomponenten - Polyurethan, welches mattiert, transparent und wasserdampfdurchlässig ist, verwendet, auf die zweite Seite der Funktionsschicht,

welche die Polymerschaum-Punkte enthält, mittels eines Luftrakels aufgetragen. Die aufgetragene Schicht weist eine Dicke von etwa 1µm auf den Polymerschaum-Punkten und von etwa 10µm in den Bereichen, in denen die Beschichtung mit der Funktionsschicht verbunden ist, auf.

Der vor der Beschichtung zu beobachtende Glanz ist stark reduziert und kann als sehr matt bezeichnet werden, wodurch der Eindruck eines normalen Futters mit Dekor erweckt wird. Ein aus diesem erfindungsgemäßen Verbundmaterial hergestelltes Bekleidungsstück löst ein angenehmes Tragegefühl auf der Haut des Trägers aus und läßt sich ohne Mühe von Armen und Beinen abstreifen. Der nach ISO 11092 gemessene RET-Wert beträgt 19 und liegt somit in derselben Klasse gemäß der Norm ENV343 wie das Laminat vor dessen Beschichtung.

## Patentansprüche

1. Wasserdampfdurchlässiges, wasserresistentes Verbundmaterial für Bekleidung, umfassend:
a) eine wasserresistente, wasserdampfdurchlässige Funktionsschicht mit einer ersten und einer zweiten Seite,
b) einen an der ersten Seite der Funktionsschicht befestigten Stoff,
c) eine Mehrzahl diskreter, Polymer-Punkte, die ein diskontinuierliches, futtererzeugendes Muster auf der Oberfläche der zweiten Seite der Funktionsschicht bilden,
d) eine wasserdampfdurchlässige, als Beschichtung ausgebildete Deckschicht, welche mit den Polymerpunkten und zwischen den Polymer-Punkten auch mit der Funktionsschicht verbunden ist.

2. Verbundmaterial nach Anspruch 1, **dadurch gekennzeichnet, dass** die Deckschicht aus transparentem Material hergestellt ist.

3. Verbundmaterial nach Anspruch 1 oder 2, dass die Deckschicht aus einem hydrophilen Material besteht.

4. Verbundmaterial nach einem oder mehreren der Ansprüche 1 bis 3, **dadurch gekennzeichnet, dass** die Deckschicht aus Polyurethan besteht.

5. Verbundmaterial nach einem oder mehreren der Ansprüche 1 bis 4, dass die Deckschicht eine Dicke zwischen 1 und 25 µm aufweist.

6. Verbundmaterial nach Anspruch 5, **dadurch gekennzeichnet, dass** die Deckschicht eine Dicke von 1 bis 10 µm aufweist.

7. Verbundmaterial nach einem oder mehreren der Ansprüche 1 bis 6, **dadurch gekennzeichnet, dass** die Polymer-Punkte aus geschäumtem Material bestehen.

8. Verbundmaterial nach einem oder mehreren der Ansprüche 1 bis 7, **dadurch gekennzeichnet, dass** die Dicke der Polymer-Punkte zwischen 100 und 250 µm beträgt.

9. Verbundmaterial nach einem oder mehreren der Ansprüche 1 bis 7, **dadurch gekennzeichnet, dass** die Dicke der Polymer-Punkte zwischen 150 und 170 µm beträgt.

## Claims

1. Water-vapor-permeable, water-resistant composite material for clothing, comprising:
a) a water-resistant, water-vapor-permeable functional layer with first and second sides,
b) a material attached to the first side of the functional layer,
c) a plurality of discrete polymer dots forming a discontinuous, lining-producing pattern on the surface of the second side of the functional layer,
d) a water-vapor-permeable cover layer that is implemented as a coating and is joined to the polymer dots and also to the functional layer between the polymer dots.

2. Composite material according to Claim 1, **characterized in that** the cover layer is made from a transparent material.

3. Composite material according to Claim 1 or 2, **characterized in that** the cover layer consists of a hydrophilic material.

4. Composite material according to one or more of Claims 1 to 3, **characterized in that** the cover layer consists of polyurethane.

5. Composite material according to one or more of Claims 1 to 4, **characterized in that** the cover layer has a thickness between 1 and 25 µm.

6. Composite material according to Claim 5, **characterized in that** the cover layer has a thickness between 1 and 10 µm.

7. Composite material according to one or more of Claims 1 to 6, **characterized in that** the polymer dots consist of a foamed material.

8. Composite material according to one or more of Claims 1 to 7, **characterized in that** the thickness of the polymer dots is between 100 and 250 µm.

9. Composite material according to one or more of Claims 1 to 7, **characterized in that** the thickness of the polymer dots is between 150 and 170 µm.

## Revendications

1. Matériau composite pour l'habillement, perméable à la vapeur d'eau et résistant à l'eau, qui comprend :
a) une couche fonctionnelle résistant à l'eau et perméable à la vapeur d'eau, avec une première et une deuxième face,
b) un matériau fixé sur une première face de la couche fonctionnelle,
c) une pluralité de points polymères séparés qui forment un motif de fourrure à la surface de la deuxième face de la couche fonctionnelle,
d) une couche de recouvrement perméable à la vapeur d'eau, configurée comme revêtement et reliée aux points polymères et également à la couche fonctionnelle entre les points polymères.

2. Matériau composite selon la revendication 1, **caractérisé en ce que** la couche de recouvrement est réalisée en un matériau transparent.

3. Matériau composite selon la revendication 1 ou 2, **caractérisé en ce que** la couche de recouvrement est réalisée en un matériau hydrophile.

4. Matériau composite selon l'une ou plusieurs des revendications 1 à 3, **caractérisé en ce que** la couche de recouvrement est réalisée en polyuréthane.

5. Matériau composite selon l'une ou plusieurs des revendications 1 à 4, **caractérisé en ce que** la couche de recouvrement présente une épaisseur de 1 à 25 µm.

6. Matériau composite selon la revendication 5, **caractérisé en ce que** la couche de recouvrement présente une épaisseur de 1 à 10 µm.

7. Matériau composite selon l'une ou plusieurs des revendications 1 à 6, **caractérisé en ce que** les points polymères sont réalisés en matériau en mousse.

8. Matériau composite selon l'une ou plusieurs des revendications 1 à 7, **caractérisé en ce que** l'épaisseur des points polymères est comprise entre 100 et 250 µm.

9. Matériau composite selon l'une ou plusieurs des revendications 1 à 7, **caractérisé en ce que** l'épaisseur des points polymères est comprise entre 150 et 170 µm.
